# EUROPÄISCHE PATENTANMELDUNG

(11) **EP 4 272 928 A1**
(43) Veröffentlichungstag der Anmeldung: **08.11.2023**
(21) Anmeldenummer: 23171320.7
(22) Anmeldetag: 03.05.2023
(51) Int. Cl.: B29C 51/02, B32B 3/30, B32B 5/26, B29C 70/40, B29C 70/48, B29C 51/12, B29C 51/14, B29C 33/02, B29C 70/46

(54) **VERFAHREN ZUM HERSTELLEN EINES BAUTEILS AUS EINEM VERBUNDMATERIAL MIT LOKAL ERHÖHTER DICKE**

(30) Priorität: 03.05.2022 DE 102022110887
(71) Anmelder: Premium AEROTEC GmbH, 86179 Augsburg (DE)
(72) Erfinder: WOHLSEN, Lenard, 86179 Augsburg (DE); ALBERT, Michael, 86179 Augsburg (DE); RÖGER, Lukas, 86179 Augsburg (DE); FRESE, Tanja, 86179 Augsburg (DE); HOLLMANN, Marc, 86179 Augsburg (DE); UELLENDAHL, Matthias, 86179 Augsburg (DE); EDELMANN, Klaus, 86179 Augsburg (DE)
(74) Vertreter: LKGLOBAL Lorenz & Kopf Patentanwalt Attorney at Law PartG mbB

(57) **Zusammenfassung**

Es wird ein Verfahren zum Herstellen eines Bauteils aus einem Verbundmaterial mit lokal erhöhter Dicke vorgeschlagen, aufweisend die Schritte: Bereitstellen einer ersten flächigen Laminatanordnung, Bereitstellen mindestens einer zweiten Laminatanordnung, die jeweils eine kleinere Fläche aufweist als die erste Laminatanordnung, Einlegen der mindestens einen zweiten Laminatanordnung in mindestens eine korrespondierende Vertiefung mindestens einer Formwerkzeugoberfläche, sodass die mindestens eine zweite Laminatanordnung bündig in der Formwerkzeugoberfläche liegt und eine stufenlose Fügefläche gebildet wird, Auflegen der ersten Laminatanordnung auf die Fügefläche, sodass die mindestens eine zweite Laminatanordnung eingeschlossen wird, Verbinden der ersten Laminatanordnung mit der zweiten Laminatanordnung durch Erwärmen und/oder Pressen, und Entnehmen des Bauteils.

## Beschreibung

### Technisches Gebiet

Die vorliegende Beschreibung betrifft ein Verfahren zum Herstellen eines Bauteils aus einem Verbundmaterial mit lokal erhöhter Dicke.

### Technischer Hintergrund

Für die Herstellung von Baugruppen und komplexen Strukturen aus einem Verbundmaterial, beispielsweise einem faserverstärkten Kunststoff, sind zahlreiche Herstellungsverfahren bekannt. Bauteile mit gleichförmiger Dicke sind dabei zumeist einfacher herzustellen als Bauteile mit Vertiefungen, Taschen oder lokal unterschiedlichen Dicken. Zur partiellen Aufdickung eines Bauteils aus einem thermoplastischen, faserverstärkten Kunststoff ist bekannt, ein Werkstück vor dem eigentlichen Umformprozess aus zwei verschieden dicken Platten zusammenzusetzen, wobei in der Grenzschicht ein geeigneter Reinharzfilm eingelegt wird, wobei das zusammengesetzte Werkstück vor der Bauteilformung konsolidiert werden muss. Dieser Prozess stellt sicher, dass Bauteile mit unterschiedlicher Dicke hergestellt werden können. Nachteilig ist neben der Konsolidierung die Notwendigkeit der exakten Positionierung des Reinharzfilms in der Fügezone.

### Beschreibung

Es ist folglich eine Aufgabe der Erfindung, ein Verfahren bzw. ein System zum Herstellen eines Bauteils aus einem Verbundmaterial mit lokal erhöhter Dicke vorzuschlagen, welches kostengünstig und rasch durchführbar ist.

Die Aufgabe wird gelöst durch ein Verfahren zum Herstellen eines Bauteils aus einem Verbundmaterial mit lokal erhöhter Dicke mit den Merkmalen des unabhängigen Anspruchs 1. Vorteilhafte Ausführungsformen und Weiterbildungen der Erfindung sind den Unteransprüchen und der nachfolgenden Beschreibung zu entnehmen.

Es wird ein Verfahren zum Herstellen eines Bauteils aus einem Verbundmaterial mit lokal erhöhter Dicke vorgeschlagen, aufweisend die Schritte: Bereitstellen einer ersten flächigen Laminatanordnung, Bereitstellen mindestens einer zweiten Laminatanordnung, die jeweils eine kleinere Fläche aufweist als die erste Laminatanordnung, Einlegen der mindestens einen zweiten Laminatanordnung in mindestens eine korrespondierende Vertiefung mindestens einer Formwerkzeugoberfläche, sodass die mindestens eine zweite Laminatanordnung bündig in der mindestens einen Formwerkzeugoberfläche liegt und eine stufenlose Fügefläche gebildet wird, Auflegen der ersten Laminatanordnung auf die Fügefläche, sodass die mindestens eine zweite Laminatanordnung eingeschlossen wird, Verbinden der ersten Laminatanordnung mit der zweiten Laminatanordnung durch Erwärmen und/oder Pressen, und Entnehmen des Bauteils.

Das Bauteil kann mit unterschiedlichen Faser-Matrix-Systemen hergestellt sein, mit denen unidirektionale Fasern, die bevorzug endlos sind, Gewebe und/oder Gelege in Form mehrerer Lagen in ein Matrixmaterial eingebunden werden und damit einen Materialverbund ausbilden. Die Fasern und das Matrixmaterial können je nach Anwendungsgebiet und zu erwartender mechanischer und thermischer Belastung ausgewählt werden.

In einer Ausführungsform könnten beispielsweise Reaktionsharze eingesetzt werden, die unter Druck und Wärme aushärten und Duromere bilden. Die beiden Laminatanordnungen könnte dann etwa durch Prepregs hergestellt und gegebenenfalls vorgehärtet sein.

Es sind indes auch thermoplastische Matrixmaterialien vorstellbar, wie etwa PPS, PEEK, PEKK, PEI, PAEK und andere. Die beiden Laminatanordnungen sind dann bevorzugt bereits in sich vollständig imprägnierte und konsolidierte Teilkomponenten, welche durch Aufeinanderlegen und Erwärmen miteinander verbindbar sind.

Die erste Laminatanordnung ist flächig ausgeführt und könnte eine gleichförmige Dicke aufweisen. Die flächige Form kann ein- oder mehrfach gekrümmt sein, bevorzugt ist sie jedoch eben. Sie weist eine erste Oberfläche auf, die mit der zweiten Oberfläche der mindestens einen zweiten Laminatanordnung eine Verbindung eingeht.

Die mindestens eine zweite Laminatanordnung könnte auf dieselbe Weise hergestellt sein und eine zusammenhängende Anordnung aus mehreren Schichten aus unidirektionalen Fasern, einem Gewebe und/oder Gelege umfassen. Grundsätzlich könnte die zweite Laminatanordnung auch Fasern umfassen, die auf andere Art verteilt oder ausgerichtet sind als in der ersten Laminatanordnung. Die zweite Oberfläche der zweiten Laminatanordnung ist derart auszubilden, dass sie flächenbündig in die jeweils zugehörige Vertiefung legbar ist.

Die beiden Laminatanordnungen weisen jeweils eine Dicke auf, die zusammen die (größere) Dicke des gewünschten Bauteils ergeben. Ein Kern der Erfindung liegt darin, zum Herstellen einer lokalen Vertiefung, einer Tasche oder einer generell lokal geringeren Dicke an allen anderen Stellen eine zweite Laminatanordnung anzuordnen. Die Flächenabschnitte, an denen keine zweite Laminatanordnung liegt, weist folglich eine geringere Dicke auf als alle anderen, benachbarten Flächenabschnitten.

Zum Herstellen eines geschlossenen Bauteils aus dem Verbundmaterial werden die beiden Laminatanordnungen miteinander verbunden, indem beispielsweise Wärme und/oder Druck auf die beiden aufeinanderliegenden Bauteile ausgeübt wird. Abhängig von dem verwendeten Matrixmaterial könnten die beiden Laminatanordnungen gemeinsam aushärten oder durch Erweichen bzw. Aufschmelzen des Matrixmaterials an der Schnittstelle zwischen der ersten Oberfläche und der zweiten Oberfläche miteinander verschmelzen. Da jedoch nur bereichsweise eine zweite Laminatanordnung angeordnet ist, entsteht kein Bauteil mit einer durchgehend gleichmäßigen Dicke. Die mindestens eine zweite Laminatanordnung kann an die gewünschten Ausgestaltung angepasst werden.

In einer vorteilhaften Ausführungsform werden mehrere zweite Laminatanordnungen bereitgestellt, die in korrespondierende Vertiefungen eingelegt werden. Die zweiten Laminatanordnungen sind bevorzugt an unterschiedlichen Stellen der Formwerkzeugoberfläche angeordnet, die insbesondere voneinander beabstandet sind. Es sind beliebige Positionen der zweiten Laminatanordnungen möglich, wobei die Erstreckungsfläche der ersten Laminatanordnung bevorzugt sämtliche zweiten Laminatanordnungen überdeckt.

In einer vorteilhaften Ausführungsform weisen die mehreren zweiten Laminatanordnungen unterschiedliche Dicken auf. Je nach Größe der ersten Laminatanordnung bzw. des herzustellenden Bauteils können die zweiten Laminatanordnungen an unterschiedlichen Stellen unterschiedliche mechanische Anforderungen erfüllen und beispielsweise unterschiedliche Versteifungen ausbilden. Die in der Formwerkzeugoberfläche angeordneten Vertiefungen sind hieran anzupassen, sodass die stufenlose Fügefläche resultiert.

In einer vorteilhaften Ausführungsform weisen die erste Laminatanordnung und die mindestens eine zweite Laminatanordnung einen faserverstärkten Kunststoff auf, der Fasern aus einer Gruppe von Fasern umfasst, die Gruppe aufweisend Kohlefasern, Glasfasern, Aramidfasern und Mischungen hiervon. Die Fasern verlaufen hierbei in mindestens einer Richtung und bevorzugt in mehreren, zueinander einen Winkel einschließende Richtungen. Insbesondere sind die Fasern in Form von Faserbündeln, Geweben oder Gelegen ausgebildet, welche als einzelne, Flächengebildet geformt sind. Die Fasern können endlos sein oder in Form von Kurzfasern und/oder ungewebtem Fasermaterial realisiert sein.

In einer vorteilhaften Ausführungsform umfassen die erste Laminatanordnung und die mindestens eine zweite Laminatanordnung einen thermoplastischen Kunststoff. Dieser kann, wie vorangehend genannt, PPS, PEEK, PEKK, PEI, PAEK und andere Kunststoffe umfassen. Die beiden Laminatanordnungen werden bevorzugt durch Aufschmelzen und stoffschlüssiges Verbinden zu dem Bauteil verbunden.

In einer vorteilhaften Ausführungsform weist das Verfahren ferner Erwärmen der ersten Laminatanordnung und der zweiten Laminatanordnung auf eine vorbestimmte Verbindungstemperatur vor dem Auflegen der ersten Laminatanordnung auf, wobei das Verbinden der ersten Laminatanordnung mit der zweiten Laminatanordnung das Pressen der ersten Laminatanordnung auf die Fügefläche umfasst. Das Erwärmen kann vor oder nach dem Auflegen der Laminatanordnungen auf die Formwerkzeugoberfläche und/oder aufeinander erfolgen.

In einer vorteilhaften Ausführungsform erfolgt das Verbinden der ersten Laminatanordnung mit der mindestens einen zweiten Laminatanordnung bei einem Thermoforming-Prozess. Bei einem Thermoforming-Prozess wird ein Zuschnitt aus einem Plattenmaterial eines thermoplastischen Materials erstellt, in einem Ofen auf Prozesstemperatur gebracht, welche oberhalb der Schmelztemperatur liegt und daraufhin in einem Formwerkzeug mit mindestens zwei aufeinander angepassten Formen in eine dreidimensionale Form überführt. Erfindungsgemäß werden beide Laminatanordnungen, die beispielsweise aus einem mit Fasern verstärkten thermoplastischen Material bestehen, erwärmt. Dabei liegen die Laminatanordnungen auf einer der Formen auf oder sind zunächst noch voneinander getrennt. Nach Erreichen der Prozesstemperatur wird mindestens eine weitere Form auf beide aufeinander liegenden Laminatanordnungen in Richtung der darunter liegenden Form(en), in der sich die korrespondierenden Vertiefungen der mindestens einen zweiten Laminatanordnung befindet, gepresst. Beide Laminatanordnungen verformen und verbinden sich zu dem Bauteil. Anschließend kann das dreidimensional geformte Bauteil, welches lokal unterschiedliche Dicken aufweist, dem Formwerkzeug nach entsprechender Abkühlung und Verfestigung entnommen werden.

Wie vorangehend erwähnt umfasst das erfindungsgemäße Verfahren in einer vorteilhaften Ausführungsform das Umformen durch den Thermoforming-Prozess mittels eines Formwerkzeugs. Das Formwerkzeug besteht aus mindestens zwei Formen, von denen eine als männliche Form, die andere als weibliche Form bezeichnet werden kann, wobei alle Formen so aufeinander angepasst sind, dass die Laminatanordnungen unter Einschluss der beiden Laminatanordnungen durch Pressen der Formen aufeinander in eine gewünschte Form gebracht werden.

Die Erfindung betrifft ferner ein System zum Herstellen eines Bauteils aus einem Verbundmaterial mit lokal erhöhter Dicke, aufweisend ein Formwerkzeug mit einer Formwerkzeugoberfläche zum Aufnehmen einer ersten Laminatanordnung und mindestens einer zweiten Laminatanordnung, wobei die Formwerkzeugoberfläche mindestens eine Vertiefung zum bündigen Aufnehmen der mindestens einen zweiten Laminatanordnung zum Bereitstellen einer stufenlosen Fügefläche für die erste Laminatanordnung aufweist, und eine Verbindungsvorrichtung, die dazu ausgebildet ist, die aufeinander liegende erste Laminatanordnung und die mindestens eine zweite Laminatanordnung durch Einwirkung von Druck und/oder Wärme zu verbinden.

In einer vorteilhaften Ausführungsform ist die Verbindungsvorrichtung dazu ausgebildet, Wärme und/oder auf die Formwerkzeugoberfläche gerichteten Druck auf die Laminatanordnungen auszuüben. Je nach eingesetzten Faser-Matrix-System kann die Verbindungsvorrichtung andersartig ausgestaltet sein. Im Wesentlichen beinhalten geeignete Verbindungsvorrichtungen für gängige Faser-Matrix-Systeme die Möglichkeit, Druck bzw. Temperatur auszuüben, um ein Aufschmelzen oder Aushärten zu erreichen.

In einer vorteilhaften Ausführungsform ist die Formwerkzeugoberfläche mindestens einer ersten Form zugeordnet, wobei die Verbindungsvorrichtung als mindestens eine zweite Form ausgebildet ist, die zu der mindestens einen ersten Form bewegbar ist und dazu ausgebildet ist, zusammen mit der mindestens einen ersten Form einen Thermoforming-Prozess zum Umformen und gleichzeitigen Verbinden der Laminatanordnungen auszuführen. Die Verbindungsvorrichtung ist folglich durch das Formwerkzeug realisiert, das mindestens eine erste und mindestens eine zweite Form aufweist, die aufeinander angepasst sind und durch Pressen der Formen unter Einschluss der Laminatanordnungen eine Verbindung und Umformung durchführen können.

In einer weiter vorteilhaften Ausführungsform ist die Werkzeugoberfläche beheizbar. Die Werkzeugoberfläche könnte damit etwa einen Teil der Verbindungsvorrichtung darstellen und als Alternative zu beispielsweise Infrarotheizeinrichtungen verwendet werden. Eine Abdeckung oder dergleichen zum Ausüben von Druck auf den Verbund aus Laminatanordnungen könnte folglich einfacher gestaltet werden, da die Heizwirkung primär von dem Formwerkzeug ausgeht.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a-1d: eine schematische Darstellung eines Systems, mit dem ein Verfahren zum Herstellen eines Bauteils aus einem Verbundmaterial mit lokal erhöhter Dicke hergestellt wird.
- Fig. 2: eine schematische Darstellung des Verfahrens.

### Detaillierte Beschreibung von Ausführungsbeispielen

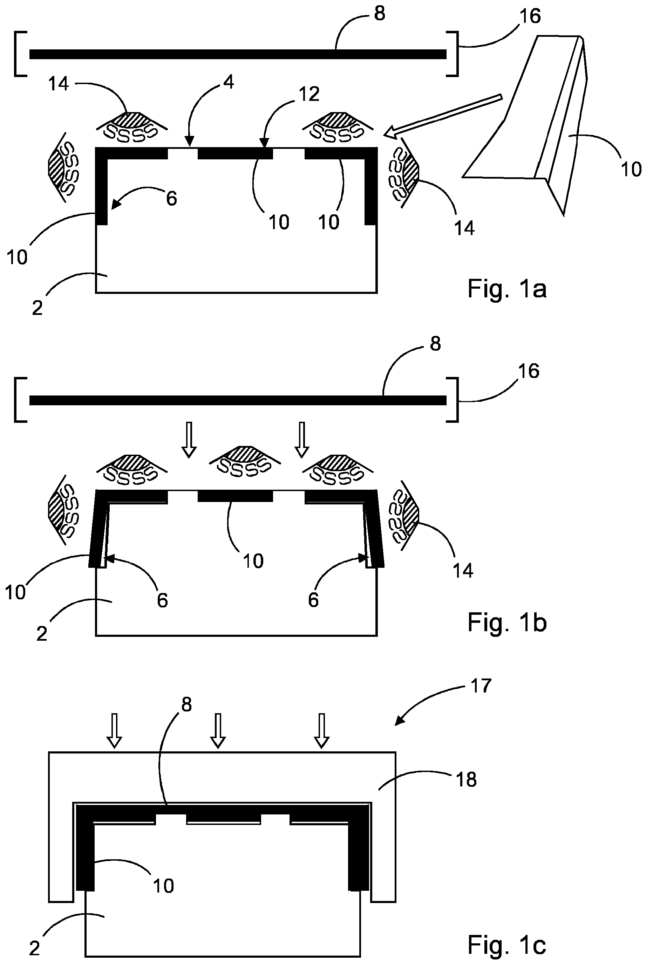

In Fig. 1a bis 1d wird ein exemplarischer, die Erfindung nicht beschränkender Ablauf eines Verfahrens zum Herstellen eines Bauteils aus einem Verbundmaterial mit lokal erhöhter Dicke sowie ein System zum Herstellen eines Bauteils dargestellt. In Fig. 1a ist eine erste Form 2 eines Formwerkzeugs dargestellt, die eine Formwerkzeugoberfläche 4 aufweist. In dieser sind mehrere Vertiefungen 6 vorgesehen. Eine erste Laminatanordnung 8 und mehrere zweite Laminatanordnungen 10 aus einem thermoplastischen, faserverstärkten Kunststoff sind bereitgestellt, um miteinander verbunden zu werden. Die zweiten Laminatanordnungen 10 sind hier in die korrespondierend ausgebildeten Vertiefungen 6 eingelegt, sodass eine bündige, stufenlose Fügefläche 12 resultiert. Die zweiten Laminatanordnungen 10 sind in einem separaten Schritt hergestellt und könnten, wie hier exemplarisch gezeigt, bereits eine nicht-flächige Form aufweisen.

Exemplarisch werden die erste Laminatanordnung 8 und die zweiten Laminatanordnungen 10 erwärmt, beispielsweise mittels Infrarotheizeinrichtungen 14 bzw. einem Infrarotofen 16. In Fig. 1b sind die Laminatanordnungen 8 und 10 auf eine Prozesstemperatur erwärmt, die oberhalb der Schmelztemperatur liegt. Die erste Laminatanordnung 8 wird auf die Fügefläche 12 gelegt, sodass die erste Form 2 und die erste Laminatanordnung 8 die zweiten Laminatanordnungen 10 einschließen.

Fig. 1c zeigt ein System 2, das die Komponenten der vorherigen Figuren mit einer zusätzlichen zweiten Form 18 aufweist, die komplementär zu der ersten Form 2 ausgeführt ist und auf die aufeinander befindlichen Laminatanordnungen 8 und 10 sowie die erste Form 2 aufgelegt wird. Dabei wird mechanischer Druck in Richtung der ersten Form 2 ausgeübt, was zu einem Umformen (Thermoformen) der ersten Laminatanordnung 8 sowie einer stoffschlüssigen Verbindung der Laminatanordnungen 8 und 10 miteinander führt. Die zweite Form 18 kann - zusammen mit der ersten Form 2 sowie zur Erwärmung der Laminatanordnungen 8 und 10 notwendiger Einrichtungen - eine Verbindungsvorrichtung ausbilden. Das Bezugszeichen 18 wird daher auch für die Verbindungsvorrichtung verwendet.

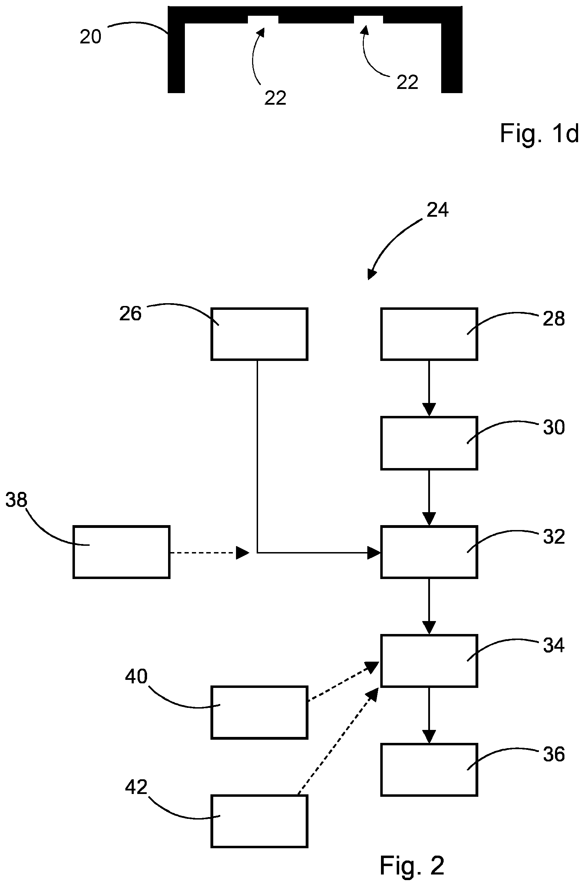

In Fig. 1d ist das daraus resultierende, fertige Bauteil 20 gezeigt, welches Bereiche 22 aufweist, die eine geringere Dicke aufweisen als benachbarte Bereiche des Bauteils 20, bzw. Bereiche 20 gegenüber benachbarten Bereichen 22 eine erhöhte Dicke aufweisen.

Fig. 2 zeigt den Ablauf des Verfahrens 24 in einer schematischen Blockdarstellung. Das Verfahren 24 weist die Schritte des Bereitstellens 26 einer ersten flächigen Laminatanordnung 8, des Bereitstellens 28 mindestens einer zweiten Laminatanordnung 10, die jeweils eine kleinere Fläche aufweist als die erste Laminatanordnung 8, des Einlegens 30 der mindestens einen zweiten Laminatanordnung 8 in mindestens eine korrespondierende Vertiefung 6 einer Formwerkzeugoberfläche 4, sodass die mindestens eine zweite Laminatanordnung 10 bündig in der Formwerkzeugoberfläche 4 liegt und eine stufenlose Fügefläche 12 gebildet wird, des Auflegens 32 der ersten Laminatanordnung 8 auf die Fügefläche 12, sodass die mindestens eine zweite Laminatanordnung 10 eingeschlossen wird, des Verbindens 34 der ersten Laminatanordnung 8 mit der zweiten Laminatanordnung 10 durch Erwärmen und/oder Pressen, und des Entnehmens 36 des Bauteils 20. Dabei werden bevorzugt die erste Laminatanordnung 8 und die mindestens eine zweite Laminatanordnung 10 auf eine vorbestimmte Verbindungstemperatur vor dem Auflegen 32 der ersten Laminatanordnung 8 erwärmt 38, wobei das Verbinden 34 der ersten Laminatanordnung 8 mit der mindestens einen zweiten Laminatanordnung 10 das Pressen 40 der ersten Laminatanordnung 8 auf die Fügefläche 12 umfasst. Hierbei kann zudem ein Thermoforming-Prozess zum Umformen ausgeführt werden 42.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: erste Form
- 4: Formwerkzeugoberfläche
- 6: Vertiefung
- 8: erste Laminatanordnung
- 10: zweite Laminatanordnung
- 12: Fügefläche
- 14: Infrarotheizeinrichtung
- 16: Infrarotofen
- 17: System
- 18: zweite Form / Verbindungsvorrichtung
- 20: Bauteil
- 22: Bereiche mit geringerer Dicke
- 24: Verfahren
- 26: Bereitstellen erster Laminatanordnung
- 28: Bereitstellen zweiter Laminatanordnung
- 30: Einlegen
- 32: Auflegen
- 34: Verbinden
- 36: Entnehmen
- 38: Erwärmen
- 40: Pressen
- 42: Umformen

## Patentansprüche

1. Verfahren (24) zum Herstellen eines Bauteils (20) aus einem Verbundmaterial mit lokal erhöhter Dicke, aufweisend die Schritte:
Bereitstellen (26) einer ersten flächigen Laminatanordnung (8),
Bereitstellen (28) mindestens einer zweiten Laminatanordnung (10), die jeweils eine kleinere Fläche aufweist als die erste Laminatanordnung (8),
Einlegen (30) der mindestens einen zweiten Laminatanordnung (8) in mindestens eine korrespondierende Vertiefung (6) mindestens einer Formwerkzeugoberfläche (4), sodass die mindestens eine zweite Laminatanordnung (10) bündig in der mindestens einen Formwerkzeugoberfläche (4) liegt und eine stufenlose Fügefläche (12) gebildet wird,
Auflegen (32) der ersten Laminatanordnung (8) auf die Fügefläche (12), sodass die mindestens eine zweite Laminatanordnung (10) eingeschlossen wird,
Verbinden der ersten Laminatanordnung (8) mit der mindestens einen zweiten Laminatanordnung (10) durch Erwärmen und/oder Pressen, und
Entnehmen (36) des Bauteils (20).

2. Verfahren (24) nach Anspruch 1,
wobei mehrere zweite Laminatanordnungen (10) bereitgestellt werden, die in korrespondierende Vertiefungen (6) eingelegt werden.

3. Verfahren (24) nach Anspruch 2,
wobei die mehreren zweiten Laminatanordnungen (10) unterschiedliche Dicken aufweisen.

4. Verfahren (24) nach einem der vorhergehenden Ansprüche,
wobei die erste Laminatanordnung (8) und die mindestens eine zweite Laminatanordnung (10) einen faserverstärkten Kunststoff aufweisen, der Fasern aus einer Gruppe von Fasern umfasst, die Gruppe aufweisend:
- Kohlefasern,
- Glasfasern,
- Aramidfasern, und
- Mischungen hiervon.

5. Verfahren (24) nach einem der vorhergehenden Ansprüche,
wobei die erste Laminatanordnung (8) und die mindestens eine zweite Laminatanordnung (10) einen thermoplastischen Kunststoff umfassen.

6. Verfahren (24) nach Anspruch 5,
ferner aufweisend:
Erwärmen (38) der ersten Laminatanordnung (8) und der mindestens einen zweiten Laminatanordnung (10), auf eine vorbestimmte Verbindungstemperatur vor dem Auflegen (32) der ersten Laminatanordnung (8),
wobei das Verbinden (34) der ersten Laminatanordnung (8) mit der mindestens einen zweiten Laminatanordnung (10) das Pressen (40) der ersten Laminatanordnung (8) auf die Fügefläche (12) umfasst.

7. Verfahren (24) nach einem der vorhergehenden Ansprüche,
wobei das Verbinden (34) der ersten Laminatanordnung (10) mit der mindestens einen zweiten Laminatanordnung (8) bei einem Thermoforming-Prozess erfolgt.

8. Verfahren (24) nach Anspruch 7,
ferner aufweisend den Schritt:
Umformen (42) durch den Thermoforming-Prozess mittels des Formwerkzeugs.

9. System (17) zum Herstellen eines Bauteils (20) aus einem Verbundmaterial mit lokal erhöhter Dicke, aufweisend:
ein Formwerkzeug mit einer Formwerkzeugoberfläche (4) zum Aufnehmen einer ersten Laminatanordnung (8) und mindestens einer zweiten Laminatanordnung (10), wobei die Formwerkzeugoberfläche (4) mindestens eine Vertiefung (6) zum bündigen Aufnehmen der mindestens einen zweiten Laminatanordnung (10) zum Bereitstellen einer stufenlosen Fügefläche (12) für die erste Laminatanordnung (8) aufweist, und
eine Verbindungsvorrichtung (18), die dazu ausgebildet ist, die aufeinander liegende erste Laminatanordnung (8) und die mindestens eine zweite Laminatanordnung (10) durch Einwirkung von Druck und/oder Wärme zu verbinden.

10. System (17) nach Anspruch 9,
wobei die Verbindungsvorrichtung (18) dazu ausgebildet ist, Wärme und/oder auf die Formwerkzeugoberfläche (4) gerichteten Druck auf die Laminatanordnungen (8, 10) auszuüben.

11. System (17) nach Anspruch 9 oder 10,
wobei die Formwerkzeugoberfläche (4) mindestens einer ersten Form (2) zugeordnet ist,
wobei die Verbindungsvorrichtung (18) als mindestens eine zweite Form (18) ausgebildet ist, die zu der mindestens einen ersten Form (2) bewegbar ist und dazu ausgebildet ist, zusammen mit der mindestens einen ersten Form (2) einen Thermoforming-Prozess zum Umformen und gleichzeitigen Verbinden der Laminatanordnungen (8, 10) auszuführen.

12. System (17) nach einem der Ansprüche 9 bis 11,
wobei die Werkzeugoberfläche (4) beheizbar ist.
